(19) **Europäisches Patentamt**

**European Patent Office**

**Office européen des brevets**

(11) **EP 1 025 375 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(51) Int Cl.⁷: **F16J 15/08**, F16K 1/226, F16K 25/00, B64C 1/38, B64C 1/40, F16F 1/02

(21) Anmeldenummer: **98959776.0**

(22) Anmeldetag: **29.10.1998**

(86) Internationale Anmeldenummer:
**PCT/DE98/03173**

(87) Internationale Veröffentlichungsnummer:
**WO 99/022163 (06.05.1999 Gazette 1999/18)**

(54) **ELASTISCHES FEDERELEMENT**

ELASTIC SPRING ELEMENT

ELEMENT ELASTIQUE A RESSORT

(84) Benannte Vertragsstaaten:
**DE FR GB IT**

(30) Priorität: **29.10.1997 DE 19747650**

(43) Veröffentlichungstag der Anmeldung:
**09.08.2000 Patentblatt 2000/32**

(73) Patentinhaber: **Astrium GmbH**
**81663 München (DE)**

(72) Erfinder:
• **WULZ, Hans, Georg**
**D-88693 Deggenhausertal (DE)**
• **BECKER, Wilfried**
**D-57074 Siegen (DE)**
• **KNABE, Helmut**
**D-88046 Friedrichshafen (DE)**

(74) Vertreter: **Meel, Thomas**
**Patentassessor,**
**c/o Dornier GmbH**
**L H G**
**88039 Friedrichshafen (DE)**

(56) Entgegenhaltungen:
| | |
|---|---|
| US-A- 4 441 726 | US-A- 4 544 610 |
| US-A- 4 854 765 | US-A- 4 858 897 |
| US-A- 5 251 917 | US-A- 5 332 239 |
| US-A- 5 352 512 | US-A- 5 366 942 |
| US-A- 5 417 441 | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein elastisches Federelement.

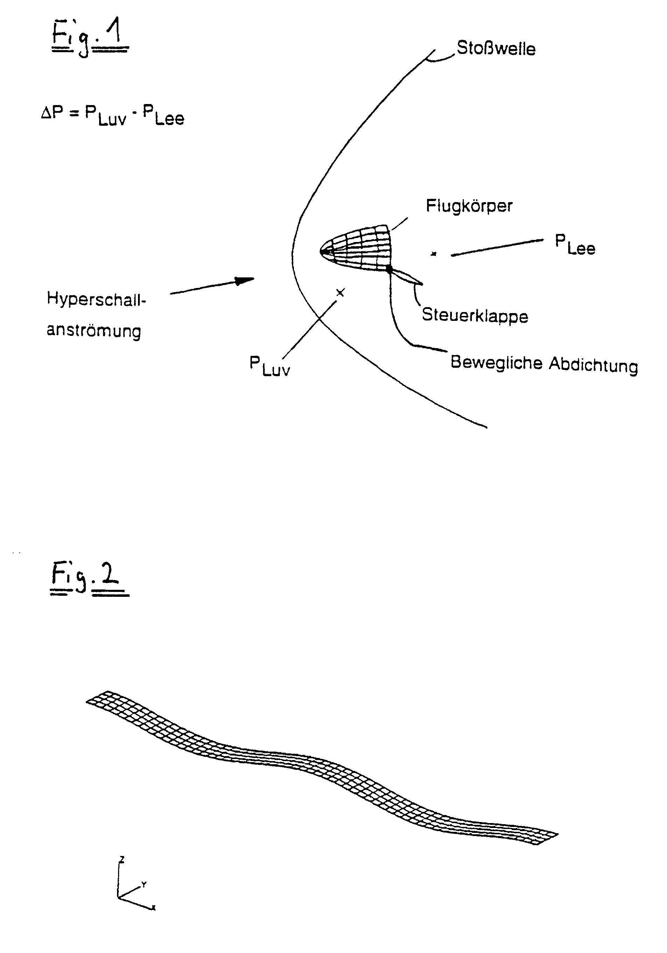

Spezielle Einsatzgebiete erfordern bei hohen Temperaturen über 1000 °C elastisch verformbare Federelemente, z.B. zum Andrücken von beweglichen heißen Gleitdichtungen. Elastische heiße Abdichtungen werden zum Beispiel benötigt zur Vermeidung einer Durchströmung von Steuerruderspalten und Heißgelenken während eines Hyperschall-Atmosphärenflugs oder während eines Eintritts in die Planetenatmosphäre. Dieser Sachverhalt ist in Fig. 1 illustriert.

Die Temperatur von 1000 °C dient deshalb als Markierung, da ab dieser Temperatur auch hochschmelzende metallische Werkstoffe zu kriechen beginnen und ihr elastisches Verhalten einbüßen. Bei hohen Temperaturen verschlechtert sich deren elastisches Verhalten zunehmend, weil ihre Zugfestigkeit dramatisch sinkt.

In der US 4,441,726 ist eine hochtemperaturbeständige Dichtung beschrieben. Sie umfaßt ein sogenanntes ceramic rope als elastisches Element, wobei das ceramic rope mit einem Geflecht aus keramischen Fasern ummantelt ist.

In der US 5,532,239 ist eine weitere hochtemperaturbeständige Dichtung beschrieben. Sie umfaßt einen metallischen Faltenbalg, der mit einem Geflecht aus keramischen Fasern ummantelt ist.

Die US 4,585,897 offenbart eine Zylinderfeder aus einer monolithischen Keramik.

Aus Fitzer et al. "Faserverbundwerkstoffe zur Anwendung bei hohen Temperaturen", Technische Keramik Handbuch, 2. Ausgabe, Seiten 91 - 103, Vulkan Verlag, Essen sind mit Endlosfasern verstärkte Keramiken für Hochtemperaturanwendungen bekannt.

Es ist Aufgabe der Erfindung, ein hochtemperaturbeständiges (bis 1600 °C ) elastisches Federelement mit großem Federweg zu schaffen.

Das erfindungsgemäße hochtemperaturbeständige elastische Federelement nach Anspruch 1 aus faserkeramischem Material löst dieses Problem in ausgezeichneter Weise. Mit dem erfindungsgemäßen endlosfaserverstärkten Federelement lassen sich bewegliche Hochtemperatur-Abdichtungen für Temperaturen über 1000 °C gut realisieren. Im Gegensatz zu allen metallischen Werkstoffen vermindert sich die Zugfestigkeit eines faserkeramischen Materials mit zunehmender Temperatur nicht, sondern steigt sogar leicht an. Die Steifigkeit des Federelements bleibt somit auch bei hohen Temperaturen bis mindestens 1600 °C erhalten und es kommt zu keiner Einbuße der Federfunktion.

Das faserkeramische Material kann z.B. durch Laminiertechnik unter Einsatz von mit Matrix-Precursor infiltrierten Endlosfaser-Prepregs oder Geweben hergestellt werden. Der durch Vernetzung des Matrix-Precursors entstandene formstabile Grünkörper kann durch einen anschließenden Pyrolyseprozeß in den faserverstärkten Keramikkörper überführt werden. Die Herstellung des faserkeramischen Materials kann ebenso durch den Flüssigsilizierprozeß von C/C-Werkstoffen oder den Civil-Vapour-Infiltration-Prozeß oder eine Kombination dieser Prozeße erfolgen.

Das erfindungsgemäße faserkeramische Federelement zeichnet sich dadurch aus, daß seine Formgebung unabhängig vom Gefügeaufbau oder Schichtaufbau des faserkeramischen Materials erfolgen kann.

Die Faserkeramik für das erfindungsgemäße Federelement kann z.B. aus folgenden Materialien bestehen:

Verstärkungsfasern: Endlosfasern aus Kohlenstoff oder Endloskeramikfasern aus oxidischen oder nitridischen oder bondischen oder karbidischen oder siliziden Keramikmaterialien oder daraus gebildeten Mischkeramiken.
Keramikmatrix: Kohlenstoff oder oxidische oder nitridische oder boridische oder karbidische oder silizide Keramikmaterialien oder daraus gebildete Mischkeramiken.

Das erfindungsgemäße elastische Element weist eine gewellte Form auf.

Das erfindungsgemäße Bauteil kann freiaufliegend mit beweglichen Enden angeordnet sein, z.B. eine Wellfeder, die in eine Nut eingelegt wird. Ebenso ist es aber auch möglich, es an einem oder mehreren Seiten oder Enden fest einzuspannen.

Die Erfindung wird anhand beispielhafter Ausführungen unter Bezugnahme auf Fig. näher erläutert. Es zeigen:

Fig. 1    Skizze zum Einsatz einer beweglichen Heißabdichtung gegen Hyperschalldurchströmung, wie in der Beschreibungseinleitung erläutert;

Fig. 2    Gittermodell eines erfindungsgemäßen elastischen Federelements;

Fig. 3    die Federkennlinie eines erfindungsgemäßen elastischen-Federelements aus einer C/SiC-Faserkeramik bei RT

Fig. 4    eine weitere Ausführung eines erfindungsgemäßen elastischen Federelements in verschiedenen Ansichten;

Fig. 5    die Abdichtung einer Steuerklappe, in der das erfindungsgemäße Federelement verwendet wird,

Fig. 6    Querschnittsdarstellungen der Anordnung nach Fig. 5.

In einer mechanischen Analyse wurden Kennwerte und die Dimensionen eines erfindungsgemäßen Musterbauteils bestimmt. Diese Feder hat die Form eines Kosinus, siehe Fig. 2, und kann analytisch beschrieben werden durch:

$$z = f \cdot \cos\left(2\pi \frac{x}{l}\right) = 2{,}5 \text{ mm} \cdot \cos\left(2\pi \frac{x}{75\text{mm}}\right)$$

mit x als Längenkoordinate im Bereich -75 m ≤ x ≤ 75 mm und z als Höhenkoordinate.

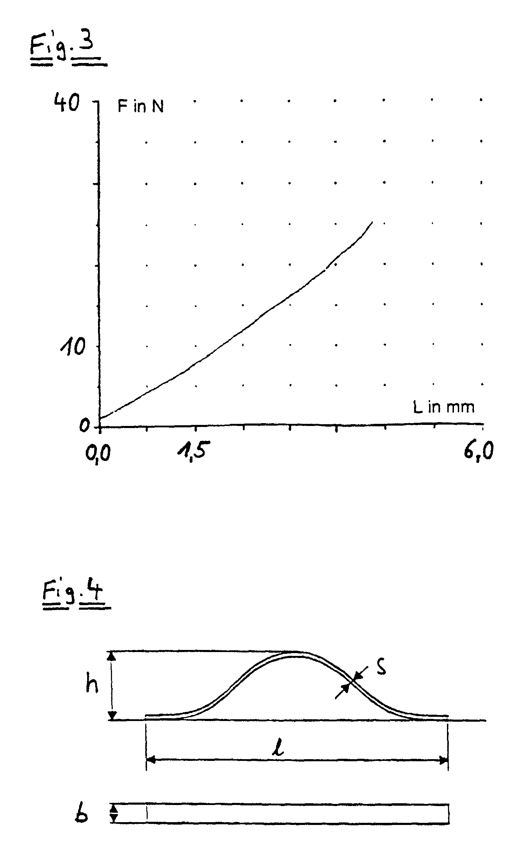

Deren Entwurfsparameter sind: Länge l = 150 mm, Breite b = 10 mm und Laminatdicke s = 1 mm. Die Wellenlänge der Feder wurde zur Erreichung eines möglichst hohen Federweges mit $\lambda$ = l/2 = 75 mm eher groß gewählt. Die Amplitude wurde mit f = 2,5 mm gewählt, das heißt die komplette Federhöhe h ("Berg zu Tal") beträgt 5 mm (zur Veranschaulichung der Parameter l,b,h,s siehe auch Fig. 4).

Am Beispiel der Testfeder ist das Federlaminat aufgebaut durch 7 symmetrische $[(0\,°/90\,°)_n]_S$- Lagen aus kohlenstofffaserverstärktem Siliziumkarbid (C/SiC) mit einer Gesamtdicke von s = 1 mm. Die Indizes in der obigen Bezeichnung des Lagenaufbau bedeuten: n = Anzahl der Lagen, s = symmetrischer Aufbau der Lagen. Aus den folgenden unidirektionalen elastischen Eigenschaften der verwendeten C/SiC-Faserkeramik

Elastizitätsmodul $E_1$ = 130000 Mpa,
Elastizitätsmodul $E_2$ = 10000 Mpa,
Querkontraktionszahl $\nu_{12}$ = 0,3,
Schubmodul $G_{12}$ = 6800 Mpa,

wurde der effektive Elastizitätsmodul mit E = 70360 Mpa berechnet.

Für die Durchbiegung (den Federweg) w ergibt die elementare Biegemechanik (Biegebalken) ein genügend genaues Ergebnis verglichen mit den Ergebnissen einer nicht-linearen Finite-Element-Berechnung:

$$w = \frac{7}{768}\ \frac{12F\lambda^3}{Es^3} \qquad \text{mit } F = p\lambda.$$

Dabei ist p der Anpreßdruck auf das Federelement.

Nach den oben angegebenen Entwurfsparametern wurden eine Anzahl von Wellfederelementen gefertigt und bei RT und bei Temperaturen bis 1400 °C über 1000 Zyklen getestet. Bis zu einer ausgelegten maximalen Durchbiegung von 2,5 mm verläuft die Federkennlinie linear, das heißt bis zu diesem Federweg verhält die Feder sich - wie berechnet - völlig elastisch (Fig. 3). Ein Vergleich der Federkennlinien zu Beginn der Messungen und jener am Ende zeigen den gleicher Verlauf. Daraus kann geschlossen werden, daß im Material keine Kriechvorgänge unter der thermomechanischen Belastung stattgefunden haben.

Fig. 4 zeigt eine weitere Ausführung des erfindungsgemäßen elastischen Federelements in Seitenansicht (oben) und in Draufsicht. Beispielhafte Werte für die Parameter l,b,h,s sind:

l = 95 mm
b = 5mm, 8 mm 10 mm
h = 3 mm, 5 mm

s = 1 mm.

## Anwendungsbeispiel

Das Problem der Abdichtung von Steuerflächen, Ruder und Klappen bei schnellfliegenden Fluggeräten und Kapseln gegen die auftreffende Hyperschallströmung ist bisher nur bis Temperaturen von max. 500 °C zufriedenstellend gelöst worden. Beispiel hierfür ist das Space Shuttle. Probleme aber gab es immer wieder infolge der hohen thermischen Belastung der Dicht- und Anpreßmaterialien während der ersten Shuttle-Flüge und bei BURAN. Beim HERMES, der noch höhere thermomechanische Anforderungen zu erfüllen hatte, ist das Abdichtproblem nicht überzeugend gelöst worden.

Für künftige wiederverwendbare Fluggeräte, Träger (Future Launcher) und Kapseln sind die thermomechanischen Anforderungen an eine bewegliches Abdichtsystem noch höher (Fig. 1). Deshalb hat die Lösung der beweglichen Abdichtung von Ruderspalten und Heißgelenken gegen die Hyperschallanströmung mit Hilfe von hochtemperaturbeständigen elastischen Federelementen eine herausragende Bedeutung.

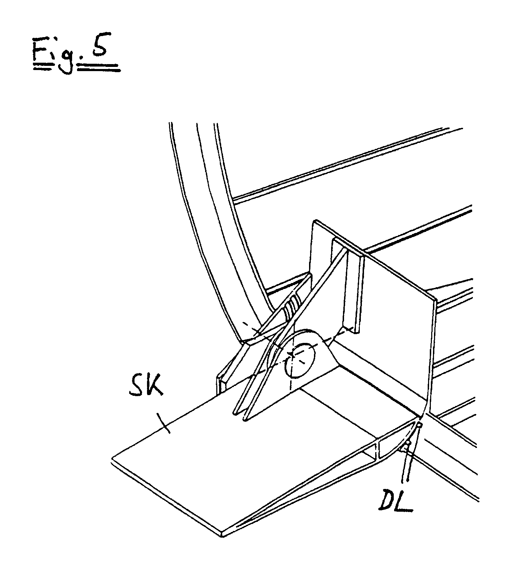

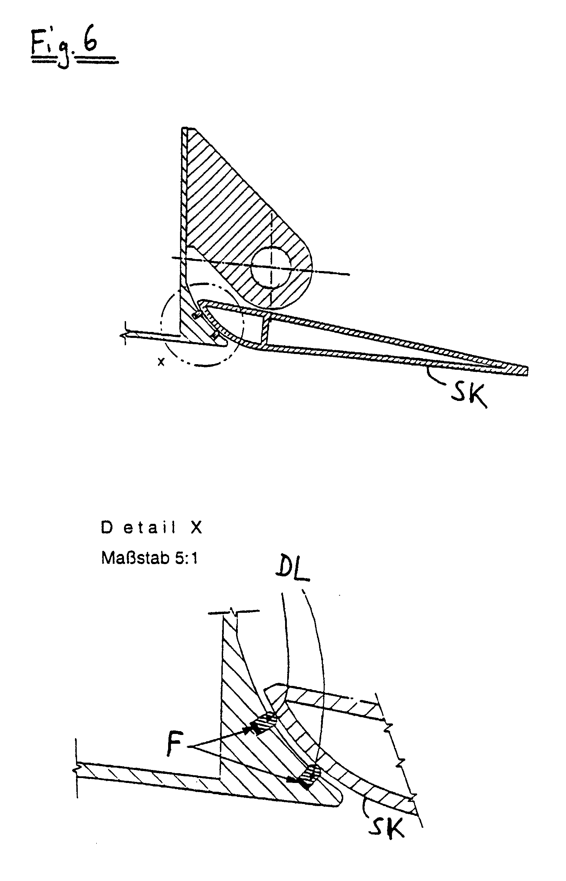

Fig. 5 zeigt als Anwendungsbeispiel einen Entwurf einer Abdichtung einer Steuerklappe SK, die am Heck eines Wiedereintrittsflugkörpers schwenkbar gelagert ist und diese gegen die auftreffende Hyperschallanströmung abdichtet. Die Steuerklappe SK ist gegen den Heckbereich des Flugkörpers mit Hilfe von Dichtleisten DL aus beschichtetem C/SiC-Keramikmaterial abgedichtet, die in Nuten des Hecks eingefügt sind. Wie in Fig. 6 anhand von Schnittzeichnungen dargestellt ist, wirkt eine erfindungsgemäße Federleiste F (Wellfeder) aus Kohlenstoffaserkeramik als Federelement und drückt die Dichtleiste gegen die bewegliche Dichtfläche DL mit Zylindermantelgeometrie an der Rückseite der Steuerklappe SK (Fig. 6).

Neben der in den Fig. 5 und 6 dargestellten Verwendung kann das erfindungsgemäße Federelement überall dort eingesetzt werden, wo hochtemperaturbeständige Federn oder Andruckelemente erforderlich sind (Verfahrenstechnik, Anlagenbau, Hochtemperaturbrennstoffzellenstacks, Triebwerksbau, Motorenbau).

## Patentansprüche

1. Elastisches Federelement, **dadurch gekennzeichnet, daß** es aus einer faserverstärkten Keramik besteht, wobei die Fasern als Endlosfasern vorliegen, und daß es eine gewellte geometrische Form aufweist.

2. Elastisches Federelement nach Anspruch 1, **dadurch gekennzeichnet, daß** die Faserkeramik aus folgenden Materialien besteht:

-   Verstärkungsfasern: Kohlenstoff oder Keramikfasern aus oxidischen oder nitridischen oder boridischen oder karbidischen oder siliziden Keramikmaterialien oder daraus gebildeten Mischkeramiken,
-   Keramikmatrix: Kohlenstoff oder oxidische oder nitridische oder boridische oder karbidische oder silizide Keramikmaterialien oder daraus gebildete Mischkeramiken.

**3.** Elastisches Federelement nach einem der vorangehenden Ansprüche, **dadurch gekennzeichnet, daß** es freiaufliegend mit beweglichen Enden oder an einem oder mehreren Enden eingespannt ist.

**4.** Verwendung eines elastischen Federelements nach einem der vorangehenden Ansprüche als Anpreßelement in einer beweglichen Hochtemperaturabdichtung.

**Claims**

**1.** Elastic spring element, **characterized in that** said spring element is composed of a fibre-reinforced ceramic, with the fibres being in the form of endless fibres, and **in that** said spring element has a corrugated geometric shape.

**2.** Elastic spring element according to Claim 1, **characterized in that** the fibre ceramic is composed of the following materials:

-   reinforcement fibres: carbon or ceramic fibres composed of oxidic, nitridic, boridic, carbidic or silicide ceramic materials, or mixed ceramics formed from them,
-   ceramic matrix: carbon or oxidic, nitridic, boridic, carbidic or silicide ceramic materials or mixed ceramics formed from them.

**3.** Elastic spring element according to one of the preceding claims, **characterized in that** said spring element lies freely with moving ends, or is clamped in at one or more ends.

**4.** Use of an elastic spring element according to one of the preceding claims as a contact-pressure element in a moving high-temperature seal.

**Revendications**

**1.** Elément ressort élastique, **caractérisé en ce qu'**il est constitué d'une céramique renforcée aux fibres, les fibres étant présentes sous la forme de fibres continues, et **en ce qu'**il présente une forme géométrique ondulée.

**2.** Elément ressort élastique selon la revendication 1, **caractérisé en ce que** la céramique à fibres est constituée des matériaux suivants ;

-   fibres de renforcement : fibres de carbone ou de céramique en matériaux de céramique oxydés ou nitrurés ou à base de bore ou carburés ou à base de silicium et en céramiques mixtes qui en sont formées,
-   matrice céramique : carbone ou matériaux de céramique oxydés ou nitrurés ou à base de bore ou carburés ou à base de silicium et céramiques mixtes qui en sont formées.

**3.** Elément ressort élastique selon l'une quelconque des revendications précédentes, **caractérisé en ce qu'**il repose librement avec des extrémités mobiles ou **en ce qu'**il est maintenu par serrage à une ou plusieurs extrémités.

**4.** Utilisation d'un élément ressort élastique selon l'une quelconque des revendications précédentes, en tant qu'élément de mise sous pression dans un joint mobile d'étanchéification haute température.

Fig.1

$\Delta P = P_{Luv} - P_{Lee}$

Stoßwelle

Flugkörper

$P_{Lee}$

Hyperschallanströmung

Steuerklappe

$P_{Luv}$

Bewegliche Abdichtung

Fig.2

z
y
x

## Fig.3

## Fig.4

Fig.5

Fig. 6

SK

Detail X
Maßstab 5:1

DL

F

SK